# EUROPÄISCHE PATENTSCHRIFT

(11) **EP 0 795 807 B1**
(45) Veröffentlichungstag und Bekanntmachung des Hinweises auf die Patenterteilung: **02.05.2003**
(21) Anmeldenummer: 97102042.5
(22) Anmeldetag: 10.02.1997
(51) Int. Cl.: G05D 23/19, B60H 1/00, B60K 37/06

(54) **Bedieneinheit für eine Fahrzeug-Heiz- oder Klimaanlage**
Operating unit for a heat or air conditioning device of a vehicle
Tableau de commande du chauffage ou du conditionnement d'air pour véhicule

(30) Priorität: 12.03.1996 DE 19609589; 15.03.1996 DE 19610148
(43) Veröffentlichungstag der Anmeldung: 17.09.1997
(73) Patentinhaber: Bayerische Motoren Werke Aktiengesellschaft, 80788 München (DE)
(72) Erfinder: Rathgeber, Gerhard, 80939 München (DE); Roth, Anna, 80807 München (DE); Schmidt, Wolfgang, 86633 Neuburg (DE); Neubert, Bernhard, 80686 München (DE); Gentner, Hariolf , Dr., 81379 München (DE); Schicktanz, Norbert, 80974 München (DE)
(74) Vertreter: Bücken, Helmut

(56) Entgegenhaltungen:
- EP-A- 0 461 360
- EP-A- 0 605 324
- EP-B- 0 155 913
- EP-B- 0 272 789
- EP-B- 0 539 508
- WO-A-96/30225
- DE-A- 3 640 608
- DE-A- 4 041 193
- DE-A- 4 337 240
- DE-C- 4 214 178
- PATENT ABSTRACTS OF JAPAN vol. 014, no. 291 (M-0989), 22.Juni 1990 & JP 02 092713 A (MITSUBISHI MOTORS CORP;OTHERS: 01), 3.April 1990,
- PATENT ABSTRACTS OF JAPAN vol. 008, no. 276 (M-346), 18.Dezember 1984 & JP 59 145615 A (MATSUSHITA DENKI SANGYO KK), 21.August 1984,

## Beschreibung

Die Erfindung betrifft eine Bedieneinheit für eine Fahrzeug-Heiz- oder Klimaanlage mit einem den Zugriff auf unterschiedliche Anzeige- und Bedienmenüs ermöglichenden Bordmonitor, wobei neben einer Wahlmöglichkeit für ein Automatikprogramm eine individuelle Einstellmöglichkeit für die Temperaturverteilung und/oder Luftverteilung in verschiedenen am Bordmonitor anzeigbaren und auswählbaren Zonen des Fahrzeug-Innenraumes vorgesehen ist.

In der EP 0 199 916 B1 ist eine zentrale Bedienungsein- und Informationsausgabe für Zusatzgeräte von Fahrzeugen, d. h. ein sog. Bordmonitor beschrieben, wobei auch der Hinweis enthalten ist, ein Fahrzeug-Klimasteuergerät über einen derartigen Bordmonitor zu bedienen. Nähere Angaben hierzu sind in dieser Schrift jedoch nicht enthalten. Ferner ist als weiterer Stand der Technik für eine übliche Bedieneinheit für eine Fahrzeugheiz- oder Klimaanlage beispielshalber die DE 34 09 321 zu nennen, die zwar vielfältige Einstellmöglichkeiten besitzt, jedoch durch die Vielzahl von Bedienknöpfen unübersichtlich ist. Nun soll aber eine derartige Bedieneinheit einerseits eine Vielzahl von Einstellmöglichkeiten bieten, andererseits jedoch einfach bedienbar sein, insbesondere wenn der Fahrer eines Kraftfahrzeuges während des Fahrens Änderungen an der Bedieneinheit vornehmen will.

Weiteren bekannten Stand der Technik beschreibt in diesem Zusammenhang die EP-A-0 461 360 sowie die EP-B-0 539 508. In der erstgenannten Schrift ist ein Bordmonitor gezeigt, der bezüglich einer Fahrzeug-Heiz- oder Klimaanlage eine individuelle Einstellmöglichkeit für die Luftverteilung in verschiedenen am Bordmonitor angezeigten und auswählbaren Zonen bietet. Aus der zweitgenannten Schrift ist eine Klimaanlagensteuerung mit einer Einstellmöglichkeit für die Temperatur in verschiedenen Zonen eines Fahrzeug-Innenraumes, nämlich für die linke und rechte Hälfte desselben, grundsätzlich bekannt.

Eine einfach und dennoch vielfältig einstellbare Bedieneinheit für eine Fahrzeug-Heiz- oder Klimaanlage mit einem Bordmonitor aufzuzeigen, ist Aufgabe der vorliegenden Erfindung.
Zur Lösung dieser Aufgabe ist vorgesehen, daß die verschiedenen Zonen des Fahrzeug-Innenraumes bezüglich eines Fahrzeug-Insassen definiert und mittels eines Bedienorganes anhand einer Symboldarstellung am Bordmonitor auswählbar sind. Vorteilhafte Aus- und Weiterbildungen sind Inhalt der Unteransprüche.

Erfindungsgemäß ist zunächst ein bei modernen Fahrzeug-Heiz- oder Klimaanlagen bereits übliches Automatikprogramm vorgesehen. In Abhängigkeit von einer angewählten Temperatur - hierzu ist wie bei jeder üblichen Heiz- oder Klimaanlage ein Temperaturwähler vorgesehen - steuert dieses Automatikprogramm die Luftverteilung und die Temperaturverteilung im Fahrzeug-Innenraum auch unter Berücksichtigung aktueller Ist-Temperaturen in einer grundsätzlich günstigen Weise, die jedoch nicht für jeden Fahrzeuginsassen optimal sein muß. Vielmehr ist das Temperaturempfinden verschiedener Personen unterschiedlich, so daß manch ein Fahrzeuginsasse eine andere Temperaturverteilung oder Luftverteilung wünscht, als vom Automatikprogramm vorgegeben wird. Daher ist - und auch dies ist noch bekannter Stand der Technik - eine individuelle Einstellmöglichkeit für die Temperaturverteilung und/oder Luftverteilung vorgesehen. Diese individuelle Einstellmöglichkeit erfolgt nun erfindungsgemäß unter Zuhilfenahme des Bordmonitors, wobei am Bordmonitor sog. Zonen anzeigbar und auswählbar sind, in denen die Temperaturverteilung und/oder auch die Luftverteilung einstellbar ist. Bevorzugte derartige Zonen sind der Kopfbereich eines Fahrzeuginsassen, der Fußraum, der Brustbereich, sowie ggf. noch der Sitzbereich.

Um auf einfache Weise diese Zonen am Bordmonitor erkennen zu können, ist eine Symboldarstellung vorgesehen, bevorzugt in Form eines sitzend dargestellten Fahrzeuginsassen. Die verschiedenen Zonen sind dabei relativ zum Fahrzeuginsassen gekennzeichnet, wobei es dann möglich ist, die jeweils erwünschte Zone mittels eines Bedienorganes, beispielsweise eines Drehknopfes oder Schiebereglers anzuwählen. Wurde nun eine Zone angewählt, so kann bevorzugt die Temperatur für diese Zone einstellbar sein, beispielsweise ebenfalls mit Hilfe eines einfachen Drehknopfes.

Auch hierbei kann eine besonders einfache und für den Benutzer bzw. Bediener verständliche Strategie zum Einsatz kommen, wonach bevorzugt nur die Temperatur im Fahrzeug-Innenraum oder in einem Teilbereich davon eingestellt wird. Das bereits erwähnte Automatikprogramm kann dann die günstigste Luftmenge und Luftverteilung selbsttätig einstellen. Nun erfordert jedoch eine Warmluftheizung vom Prinzip her im Gegensatz zu einer in Wohnräumen üblichen Konvektionsheizung, daß auch die Luftmenge variiert wird, wenn ein Fahrzeuginsasse eine höhere Wunschtemperatur vorgibt. Diese jeweils günstigste Luftmenge wird dabei insbesondere unter Berücksichtigung der aktuellen Innentemperatur, aber auch in Abhängigkeit von der jeweiligen Umgebungstemperatur, vom Automatikprogramm vorgegeben. Der Fahrzeuginsasse muß sich somit grundsätzlich nicht um die Einstellung der jeweils günstigsten Luftmenge kümmern, was einen hohen Bedienkomfort bedeutet.

In gewissen Fällen kann jedoch ein Fahrzeuginsasse eine andere Luftmenge wünschen, als vom Automatikprogramm vorgegeben wird. Hierzu ist dem Insassen die Möglichkeit gegeben, das Automatikprogramm entweder zu vertrimmen, d. h. dem Programm eine Differenz-Luftmenge zu überlagern, oder vollkommen unabhängig vom Automatikprogramm einen eigenen Luftmengenwunsch vorzugeben. Hierzu sind bei dem in der oben genannten DE 34 09 321 beschriebenen Stand der Technik separate Tasten vorgesehen, die üblicherweise hinter einer Blende versteckt und lediglich nach Wegklappen dieser Blende zugänglich sind. Da zum Einstellen eines eigenen Luftmengen-Wuschwertes bei dieser bekannten Bedieneinheit mehrere Handbewegungen erforderlich sind, kann nach einer vorteilhaften Weiterbildung der Erfindung ist eine besonders vorteilhafte Einstellmöglichkeit für die Luftmenge vorgesehen sein, wobei jedoch der Übersichtlichkeit halber der Temperatureinstellung die Präferenz gegeben werden sollte. Daher wird vorgeschlagen, einen Luftmengenwähler versteckt gegenüber einem Temperaturwähler anzuordnen. Hierzu kann konzentrisch zu einem Drehknopf für die Temperatureinstellung ein Drehknopf für die Luftmenge vorgesehen sein, welcher üblicherweise gegenüber dem Temperatureinstell-Drehknopf versenkt ist. Lediglich nach entsprechender Betätigung, beispielsweise durch Druck auf den Drehknopf, kann der Luftmengen-Drehknopf in eine gegenüber dem Temperatur-Drehknopf herausragende Position gebracht werden.

Dies sowie weitere Merkmale und Vorteile der Erfindung gehen auch aus der folgenden Beschreibung eines bevorzugten Ausführungsbeispiels hervor.
Dabei zeigt
- Figur 1: eine Aufsicht auf eine erfindungsgemäße Bedieneinheit, sowie
- Figur 2a: einen Drehknopf für die Temperatur- und Luftmengeneinstellung in der üblichen Position, sowie in
- Figur 2b: diesen Drehknopf in derjenigen Position, die die Einstellung der Luftmenge ermöglicht.

Mit der Bezugsziffer 1 ist ein sog. Bordmonitor bezeichnet, der im Armaturenbrett eines Kraftfahrzeuges angeordnet ist. Dieser Bordmonitor 1 besitzt unterschiedliche Anzeige- und Bedienmenüs, d. h. über diesen Bordmonitor kann das Display eines Radiogerätes 2, das neben dem Bordmonitor 1 angeordnet ist, angezeigt werden, ferner entsprechende Funktionen des Kassettenspielers 3, der sich oberhalb des Radiogerätes 2 befindet. Wie dem Fachmann bekannt, kann der Bordmonitor 1 diverse Anzeigen, das Fahrzeug betreffend, enthalten, so beispielsweise über die Kühlmittel- und Öltemperatur der das Fahrzeug antreibenden Brennkraftmaschine. Alternativ kann über den Bordmonitor auch die Anzeige eines Verkehrsleitsystemes eingespielt werden, ferner kann bei Betätigung der entsprechenden Taste 4 auch die Uhrzeit angezeigt werden, darüber hinaus kann über die Taste 5 ein Funktelefon betätigt und dessen entsprechende Funktionen wiederum über den Bordmonitor 1 angezeigt werden. Angewählt werden können die verschiedenen Anzeige- und Bedienmenüs über die Menütaste 6, während innerhalb des jeweils angezeigten Feldes verschiedene Bereiche mit einem drehknopfartig ausgebildeten Bedienorgan 7 angewählt werden können.

Unterhalb der nicht näher bezeichneten Einheit von Bordmonitor 1 und Radiogerät 2 ist ein Bedienpanel 8 vorgesehen, das als Bedieneinheit für die Fahrzeugheiz- oder Klimaanlage fungiert. Auf diesem Bedienpanel 8 bzw. auf dieser Bedieneinheit sind sowenige Bedienelemente, d. h. Knöpfe, Tasten, Drehknöpfe oder dgl. als möglich angeordnet, um eine einfache, leicht verständliche Bedienbarkeit für die Fahrzeuginsassen sicherzustellen. Dennoch soll neben einem anwählbaren Automatikprogramm - hierfür ist die Automatiktaste 9 vorgesehen - auch eine individuelle Einstellmöglichkeit für die Temperaturverteilung und/oder Luftverteilung in verschiedenen Zonen gegeben sein, damit jeder Fahrzeuginsasse die für sich optimalen Klimatisierungsverhältnisse einstellen kann. Neben der Automatiktaste 9 ist hierfür eine Individualtaste 10 vorgesehen. Im übrigen ist sowohl die Automatiktaste 9 als auch die Individualtaste 10 zweifach am Bedienpanel 8 vorgesehen, so daß für zwei verschiedene Bereiche des Fahrzeug-Innenraumes ebenfalls unterschiedliche Klimatisierungsverhältnisse eingestellt werden können. Wie üblich handelt es sich bei diesen beiden verschiedenen Bereiche um die Seite des Fahrers sowie des Beifahrers des Kraftfahrzeuges bzw. des üblichen Personenkraftwagens.

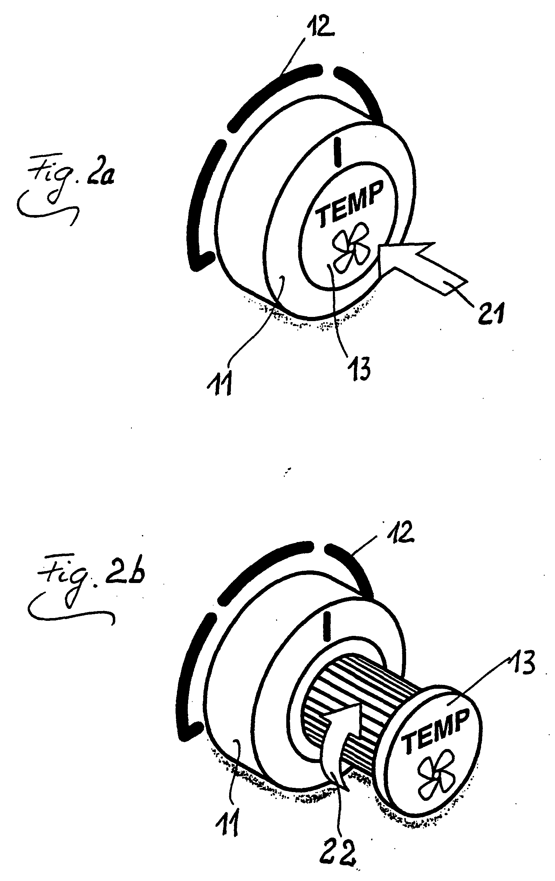

Aufgrund der individuellen Aufteilung für die Fahrerseite und für die Beifahrerseite sind auch zwei Drehknöpfe 11 vorgesehen, mit denen in den genannten verschiedenen Bereichen des Fahrzeug-Innenraumes vorrangig eine Wuschtemperatur einstelllbar ist. Hierzu ist an jedem Drehknopf 11 eine entsprechende Skala 12 vorgesehen, die Temperaturwerte wiedergibt, so daß mit diesem Drehknopf 11 ein Temperatur-Wunschwert eingestellt werden kann. Ist das Automatikprogramm gewählt, d.h. ist die Automatiktaste 9 gedrückt, so gibt der Fahrzeuginsasse mit dem Drehknopf 11 lediglich seinen Temperaturwunsch vor, wonach das Automatikprogramm für eine optimale Einstellung der Temperaturverteilung und Luftmengenverteilung sorgt. Insbesondere berücksichtigt das Automatikprogramm bei der Ermittlung der Luftmenge den aktuellen Temperaturwert im Fahrzeug-Innenraum. Wünscht ein Fahrzeuginsasse jedoch eine andere Luftmenge als vom Automatikprogramm vorgegeben, so kann er diese andere Luftmenge mit einem ebenfalls vorgesehenen Drehknopf 13 für die Luftmenge einstellen. Dieser Drehknopf 13 ist in seiner üblichen Position quasi versteckt angeordnet, d. h. der Drehknopf 13 befindet sich konzentrisch innerhalb des Drehknopfes 11 und ist in diesem üblicherweise versenkt angeordnet, wie Fig. 2a zeigt. Durch Druck auf diesen Drehknopf 13 gemäß Pfeil 21 ist dieser Drehknopf 13 in eine aus dem Drehknopf 11 herausragende Position bringbar, wie dies in Fig. 2b dargestellt ist. Nunmehr ist der Drehknopf 13 frei zugänglich, so daß die Luftmenge durch Drehen gemäß Pfeil 22 wie gewünscht eingestellt werden kann, wobei mit Betätigung dieses Drehknopfes 13 entweder das Automatikprogramm außer Funktion gebracht oder lediglich vertrimmt wird. Anschließend kann der Drehknopf 13 durch Druck wieder in die im Drehknopf 11 versenkte Position gemäß Fig. 2a gebracht werden. Nunmehr erfolgt die Klimatisierung mit einer gegenüber dem Automatikprogramm veränderten Luftmenge, die Luftverteilung und Temperaturverteilung in den verschiedenen Zonen erfolgt jedoch noch gemäß den Vorgaben des Automatikprogrammes. Eine Rückstellung in den vom Automatikprogramm vorgegebenen Wert kann dabei entweder durch Betätigung der Automatiktaste 9 oder durch Synchronisation des Drehknopfes 13 für die Luftmenge mit dem jeweiligen Luftmengenwert des Automatikprogrammes erfolgen.

Nun soll dem Fahrzeuginsassen aber auch die Möglichkeit gegeben werden, die Temperaturverteilung und/oder Luftmengenverteilung nicht nur - wie üblich -bezüglich der linken und rechten sowie ggf. bezüglich der vorderen und hinteren Hälfte des Fahrzeug-Innenraumes eines Personenkraftwagens frei wählen zu können, sondern auch bezüglich verschiedener Zonen innerhalb dieses rechten oder linken ggf. vorderen oder hinteren Bereiches. Bei diesen Zonen kann es sich beispielsweise um den Fußraum handeln, oder um die Zone, in der sich die Sitzfläche befindet, oder um die Zone des Brustkorbes, sowie um diejenige Zone, in der sich üblicherweise die Köpfe der Fahrzeuginsassen befinden. Diese einzelnen Zonen sind in der gezeigten Symboldarstellung 14 am Bordmonitor 1, die einen sitzenden Fahrzeuginsassen zeigt, mit dem römischen Bezugsziffern I, II, III, IV bezeichnet. Dabei kann für jeden Fahrzeug-Insassen eine eigene Zonenunterteilung vorgesehen sein, d. h. es kann eine individuelle Einstellung für "links vorne", rechts vorne", links hinten" und "rechts hinten" vorgesehen sein.

Die Symboldarstellung 14 erscheint dabei nach einem Druck auf die Individual-Taste 10 am Bordmonitor 1. Ferner erscheint ein Balkendiagramm 15, welches näherungsweise einen Temperaturwert symbolisiert. Hierzu ist dieses Balkendiagramm zweifarbig gestaltet, der hellere Bereich kann dabei blaufarbig sein und für Kälte stehen, während der dunklere Bereich rotfarbig sein kann und dementsprechend Wärme signalisiert. Ein größerer Bereich des blauen Feldes steht für kältere Temperaturen, während ein größerer Bereich des roten Feldes wärmere Temperaturen symbolisiert.

Die individuelle Einstellung kann dann (nach Drücken der Individual-Taste 10) wie folgt geschehen:

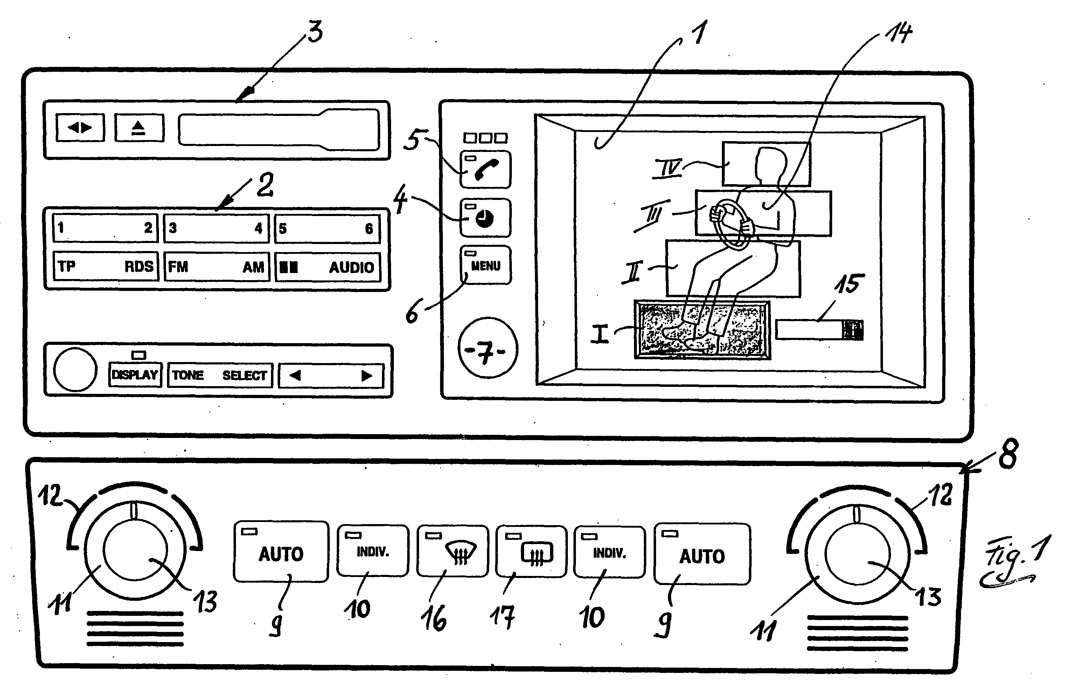

Mit dem Bedienorgan 7 wird eine der vier Zonen angewählt, die jeweils angewählte Zone wird dabei dunkler unterlegt. In Figur 1 handelt es sich hierbei um die Zone I, d. h. um den Fußraumbereich. Für diese jeweils aktuell angewählte Zone kann nun individuell eine Wunschtemperatur eingestellt werden, und zwar durch Drehen des Drehknopfes 11. Soll auch die Luftmenge für diese Zone geändert werden, so kann dies mittels des Drehknopfes 13 erfolgen, nachdem dieser - wie oben erläutert - in die Position gemäß Figur 2b gebracht wurde. Allein durch Betätigen der Individual-Taste 10 sowie durch anschließendes Auswählen der gewünschten Zone mit dem Bedienorgan 7 und durch anschließendes Wählen der Temperatur mit dem Drehknopf 11 (sowie ggf. noch durch Betätigen des Drehknopfes 13 für die Luftmenge) kann ein Fahrzeuginsasse somit die jeweilige von ihm gewünschte Klimatisierung einstellen, wenn er mit den Einstellwerten des Automatikprogrammes nicht zufrieden ist. Das gezeigte und beschriebene System erlaubt somit eine maximale Individualisierung, ohne daß hierzu eine Vielzahl von schwer verständlichen und eine Unübersichtlichkeit hervorrufenden Bedienorganen vorhanden wären. Vielmehr sind lediglich wenige Bedienorgane vorhanden, darüber hinaus ist in den meisten Fällen ohnehin das Anwählen eines Automatikprogrammes durch Betätigen der Automatiktaste 9, ggf. verbunden mit einer Temperaturwahl mit Hilfe des Drehknopfes 11 ausreichend.
Insgesamt wird mit der beschriebenen Bedieneinheit für eine Fahrzeug-Heiz- oder Klimaanlage somit nur eine geringe Anzahl von Bedienelementen benötigt, was eine einfache Bedienung gewährleistet. Neben der Automatiktaste 9 sowie der Individual-Taste 10 sind ferner noch zwei gängige und daher jedem Fahrzeugbenutzer geläufige Tasten 16 und 17 für die Scheibendefrostung sowie für die elektrische Heckscheibenheizung vorgesehen, jedoch kann dies sowie weitere Details durchaus abweichend vom gezeigten Ausführungsbeispiel gestaltet sein, ohne den Inhalt der Patentansprüche zu verlassen.

## Patentansprüche

1. Bedieneinheit für eine Fahrzeug-Heiz- oder Klimaanlage mit einem den Zugriff auf unterschiedliche Anzeige- und Bedienmenüs ermöglichenden Bordmonitor (1), wobei neben einer Wahlmöglichkeit für ein Automatikprogramm eine individuelle Einstellmöglichkeit für die Temperaturverteilung und/oder Luftverteilung in verschiedenen am Bordmonitor (1) anzeigbaren und auswählbaren Zonen (I, II, III, IV) des Fahrzeug-Innenraumes vorgesehen ist,
**dadurch gekennzeichnet, daß** die verschiedenen Zonen (I bis IV) des Fahrzeug-Innenraumes bezüglich eines Fahrzeug-Insassen definiert und mittels eines Bedienorganes (7) anhand einer einzigen Symboldarstellung (14) am Bordmonitor (1) auswählbar sind.

2. Bedieneinheit nach Anspruch 1,
**dadurch gekennzeichnet, daß** die Temperatur für die einzelnen Zonen (I bis IV) einstellbar ist und die entsprechende Luftmenge vom Automatikprogramm einstellbar ist.

3. Bedieneinheit nach Anspruch 1 oder 2,
**dadurch gekennzeichnet, daß** für jeden Fahrzeug-Insassen (vorne links, vorne rechts, hinten links, hinten rechts) eine eigene Unterteilung in Zonen (I bis IV) vorgesehen ist.

4. Bedieneinheit nach einem der vorhergehenden Ansprüche,
**dadurch gekennzeichnet, daß** konzentrisch zu einem Drehknopf (11) für die Temperatureinstellung sowie üblicherweise gegenüber diesem versenkt ein in eine herausragende Position bringbarer Drehknopf (13) für die Luftmenge vorgesehen ist.

5. Bedieneinheit nach einem der vorhergehenden Ansprüche,
**dadurch gekennzeichnet, daß** für verschiedene Bereiche des Fahrzeug-Innenraumes separate Drehknöpfe (11,13) für die Temperaturund/oder Luftmengeneinstellung vorgesehen sind.

## Claims

1. A control unit for a vehicle heating or air-conditioning system with an onboard monitor (1) enabling access to different display and control menus, an individual adjustment possibility for temperature distribution and/or air distribution in different zones (I, II, III, IV) of the vehicle interior which are displayable and selectable on the monitor (1) being provided in addition to a selection possibility for an automatic program, **characterised in that** the different zones (I to IV) of the vehicle interior are defined with respect to a vehicle occupant and are selectable by means of a control element (7) with reference to a single symbolic representation (14) on the monitor (1).

2. A control unit according to Claim 1, **characterised in that** the temperature for the individual zones (I to IV) is adjustable and the corresponding air quantity can be set by the automatic program.

3. A control unit according to Claim 1 or Claim 2, **characterised in that** an individual subdivision into zones (I to IV) is provided for each vehicle occupant (front left, front right, rear left, rear right).

4. A control unit according to one of the preceding claims, **characterised in that** a rotary knob (13) for the air quantity is provided concentrically with a rotary knob (11) for temperature adjustment, the rotary knob (13) being usually retracted with respect to the rotary knob (11) and being movable to a projecting position.

5. A control unit according to one of the preceding claims, **characterised in that** separate rotary knobs (11, 13) are provided for temperature and/or air quantity adjustment for different zones of the vehicle interior.

## Revendications

1. Tableau de commande du chauffage ou de la climatisation d'un véhicule automobile, comportant un écran de contrôle (1) permettant l'accès à différents menus d'affichage et de commande, avec en plus de la possibilité de sélectionner un programme automatique, la possibilité individuelle de régler la répartition de la température et/ou de l'air dans différentes zones (I, II, III, IV) de l'habitacle du véhicule, affichables et sélectionnables sur l'écran de contrôle (1).
**caractérisé en ce que**
les différentes zones (I à IV) de l'habitacle du véhicule sont définies par rapport à un occupant du véhicule et peuvent être sélectionnées au moyen d'un organe de commande (7) avec l'aide d'une représentation symbolique (14) sur l'écran de contrôle (1).

2. Tableau de commande selon la revendication 1,
**caractérisé en ce que**
la température des zones individuelles (I à IV) est réglable, le débit d'air correspondant pouvant être réglé par le programme automatique.

3. Tableau de commande selon la revendication 1 ou 2,
**caractérisé en ce que**
pour chaque occupant du véhicule (avant gauche, avant droit, arrière gauche, arrière droit) il est prévu une division propre en zones (I à IV).

4. Tableau de commande selon l'une des revendications précédentes,
**caractérisé en ce qu'**
il est prévu, monté concentriquement à un bouton rotatif (11) de réglage de la température et usuellement noyé dans celui-ci, un bouton rotatif (13) qui peut être amené en position dépassante, pour régler le débit d'air.

5. Tableau de commande selon l'une des revendications précédentes,
**caractérisé en ce qu'**
il est prévu, pour différentes zones de l'habitacle du véhicule, des boutons rotatifs séparés (11, 13) pour régler la température et/ou le débit d'air.
